Europäisches Patentamt

(19) European Patent Office

Office européen des brevets

(11) Publication number: **0 455 464 A2**

# (12) EUROPEAN PATENT APPLICATION

(21) Application number: **91303896.4**

(51) Int. Cl.⁵: **F16L 25/00**

(22) Date of filing: **30.04.91**

<br>

(30) Priority: **01.05.90 GB 9009806**

(43) Date of publication of application:
**06.11.91 Bulletin 91/45**

(84) Designated Contracting States:
**AT BE CH DE ES FR GB IT LI LU NL SE**

(71) Applicant: **VICTAULIC PLC**
**P.O. Box 13 46-48 Wilbury Way**
**Hitchin Hertfordshire SG4 0UD (GB)**

(72) Inventor: **Rex, Brian**
**6 Chasehill Road**
**Arlesey, Bedfordshire (GB)**
Inventor: **Davis, Francis Walter**
**Chequers Lodge, Chequers Close, Stotfold**
**Nr. Hitchin, Hertfordshire (GB)**

(74) Representative: **Heath, Peter William Murray**
**FRY HEATH & CO. St. Georges House 6**
**Yattendon Road**
**Horley Surrey RH6 7BS (GB)**

(54) **Pipe couplings.**

(57)   A pipe coupling comprising a plurality of generally arcuate segments adapted to abut one another end to end when fully made up; the segments of the coupling being provided with two sets of axially separated keys extending radially inwardly thereof and adapted, in use, to engage in outer annular peripheral grooves in the pipes to be jointed by the coupling adjacent the ends thereof; an annular sealing gasket disposed between the keys for providing a seal for the pipes to be joined by the coupling; and means for coupling the segments together at their ends. The segment ends have surfaces for complementary mating one with another lying in a plane passing through the axis of the coupling and at right angles to the median plane of the coupling, and the means for coupling the segments together at their ends are arranged to impose a coupling force on the segment end along a line inclined to the median plane of the coupling such that, after the complementary mating surfaces of adjacent segments are brought together to a fully made up disposition by operation of the coupling means, the keys are, at least in part, inclined to the median plane and the segments are aligned with the median plane, whereby in use the keys engage and bear upon side walls of the outer peripheral grooves of the point being jointed.

EP 0 455 464 A2

Fig.1.

This invention relates to pipe couplings, and more particularly to pipe couplings of the kind adapted to connect together two pipes each having an annular outer peripheral groove formed (by rolling or cutting for example) adjacent the end thereof.

Pipe couplings of this kind may be made of malleable iron, or steel for example and comprise a plurality of arcuate segments adapted to be coupled together and, in use and when fully made up (i.e. when tightly connected together), encircle and form a joint between two pipes and hold a sealing gasket of annular configuration into sealing engagement with the external peripheries of the pipes concerned, the arcuate segments being provided with radially inwardly projecting ribs (or keys) which, in use, fit within the annular peripheral grooves of the pipes adjacent the ends thereof to lock the pipes together. Such pipe couplings both seal and lock the joint between the two pipes.

It is to be understood that the expression "pipe" as used herein means pipes and tubes as such and also pipe-like members and fittings for use in pipework such as bends, elbows, 'T' connectors and parts of devices adapted to be fitted into pipework, such as valves and pumps.

It is also to be understood that the expression "median plane" as used herein in relation to the pipe coupling means the single plane passing generally through the mean of the arcuate centre lines of each of the plurality of segments of the coupling when coupled together.

Additionally it is to be understood that the expression "the axis" as used herein in relation to the pipe coupling means the axis passing through the centre of the coupling and at right angles to the median plane.

With joints using such couplings, it is desirable that, in the fully made up condition, the ends of each segment are in contact or at least closely juxtaposed so as to avoid any possibility of the annular sealing gasket being forced or "extruded" between the ends of adjacent segments of the coupling by internal pressure from within the two pipes connected by means of the coupling. Alternative to this requirement on make-up is the provision of complicated and, therefore, expensive arrangements for protection adjacent the ends of the segments of the coupling to resist any tendency of the gasket to be "extruded" by pressure from within the pipe if the ends of the segments are not closely pressed together on final make-up of the coupling in the formation of a joint between two pipes. Such protection arrangements can, for example, comprise arcuate plates spanning the gaps between segments within the coupling.

Ensuring that the ends of the segments of the coupling are firmly pressed together in the fully made up condition of the coupling means that the coupling, when made up, does have a single effective internal peripheral or circumferential length. In view of manufacturing tolerance ranges used in the manufacture and assembly of couplings and pipes, this means that, in practice, the single internal peripheral length of the minimum tolerance range size of coupling must be such as to accommodate the maximum tolerance range size pipe and minimum depth peripheral grooves therein. The practical effect of this is that with the majority of pipes and couplings, the coupling, when fully made up, is not in full metal-to-metal radial contact around the pipe, or the grooves therein, although the pipe joint is satisfactorily locked and sealed. The result of this is that it is commonly possible to move the pipes laterally and/or rotationally and/or angularly within the coupling at the joint, so that the desirable attainment of a joint which is firmly rigid and immovable as well as locked and sealed is not readily obtained.

Attempts have been made to resolve the problem of the lack of rigidity of these joints. Thus, proposals have been made for permitting separation between the ends of segments in the fully made up condition of the joint, the segments being connected together and the coupling made up to bear on the pipes without the segment ends necessarily meeting. Such arrangements do, however, require provision for the prevention of extrusion of the gasket from between the ends of the segments, and can introduce mechanical weakness at the segment end when the segments are coupled together.

It has also been proposed to allow sliding engagement between angled end faces of segments on make up of the coupling so that there is not just one fully made up condition of the coupling with a single internal peripheral length, but provision for a variable internal peripheral length to enable the firmly held accommodation of pipes within a full manufacturing range of tolerances. Such an arrangement, however, involves a relatively complicated, and hence expensive, segment end configuration and coupling arrangement, and in addition in practical terms involves disadvantageous point contact.

It is an object of the present invention to overcome or at least substantially reduce the above mentioned problems.

In accordance with one aspect of the present invention there is provided a pipe coupling comprising a plurality of generally arcuate segments adapted to abut one another end to end when fully made up; the segments of the coupling being provided with two sets of axially separated keys extending radially inwardly thereof and adapted, in use, to engage in outer and annular peripheral grooves in and adjacent the ends of pipes to be jointed by the coupling; and the coupling being provided with an annular sealing gasket disposed between the keys for providing a seal for the pipes to be joined by the coupling; means for coupling segments together at their ends, the segment ends having surfaces for complementary mating one with another, said surfaces each lying in a plane passing through the axis of the coupling and at right angles to the median plane of the coupling; the means for coupling the segments together at their ends being arranged to impose a coupling force on the segment end along a line inclined to the median plane of the coupling such that, after the complementary mating surfaces of adjacent segments are brought together to a fully made up disposition by operation of the coupling means, the keys are, at least in part, inclined to the median plane and the segments are aligned with the median plane, whereby in use the keys engage and bear upon side walls of the outer peripheral grooves of the point being jointed.

In accordance with another aspect of the present invention there is provided a pipe coupling comprising a plurality of generally arcuate segments having generally radially extending lugs at or adjacent each segment end carrying means for coupling together the segments, the segment ends and lugs having surfaces in the axial plane of the coupling and at right angles to the median plane for complementary mating one with another in make up of the coupling; the means for coupling together the segments passing through juxtaposed lugs of adjacent arcuate segments from surfaces thereof inclined to the median plane of the coupling whereby the means for coupling together the segments are adapted to apply a coupling force in a line inclined to the median plane of the segments; the segments of the coupling being provided with two sets of axially separated keys extending radially inwardly thereof and adapted in use to engage in outer axially peripheral grooves in or adjacent the ends of the pipes to be joined by the coupling, and the coupling being provided with an annular sealing gasket disposed between the keys for providing a seal for the pipes jointed by the coupling; the relative dispostion of the coupling means and the complementary mating surfaces of the segment ends and lugs being such that upon coupling the segments together by means of the means for coupling, the keys are, at least in part, inclined to the median plane and the segments are aligned with the median plane, whereby, in use, the keys engage and bear upon side walls of the outer peripheral grooves of the pipes being jointed.

In one embodiment of the invention, the keys of each segment are, at least in part, inclined to the arcuate centre line of their segment, whereby, in use, loose assembly of the coupling upon the pipes to be jointed with the keys located within the outer peripheral annular grooves of the pipe causes the arcuate centre line of each of the segments to be inclined to the median plane. During make up the complementary mating surfaces at the ends of the segments slide together to bring the segments into alignment with the median plane, whilst causing at least part of the keys of the segments to adopt a line inclined to the median plane so as to bear upon the side edges of the groove of the pipes to be jointed by the coupling.

In one embodiment of the invention the means for coupling together the segments comprise nuts and bolts passing through the lugs between surfaces thereof inclined to the median plane of the coupling.

Conveniently the coupling may comprise two generally semi-circular segments adapted to be coupled together about the two pipes to be joined, in which case the coupling means at the complementary mating ends of the two segments may be inclined oppositely equally with respect to the median plane of the coupling.

The axially facing portions of the walls of the keys of the segments may be angled with respect to the inclined line of the keys such that at full make up for a joint incorporating the coupling and pipes, bearing contact between the keys and the side walls of the pipes is over the areas of the angled portions of the keys. This arrangement significantly reduces a major problem of the disposition of the earlier proposal mentioned hereinabove for sliding engagement between inclined end faces of segments, where there is only theoretical point contact between the sides of the segments and the walls of the pipe grooves when the joint is made up, thus leading to undesirable local stress within the joint and pipe ends.

The invention includes within its scope a pipe joint incorporating a coupling as herein defined.

In order that the invention may be more readily understood, one embodiment thereof will now be described by way of example with reference to the accompanying drawings in which:-

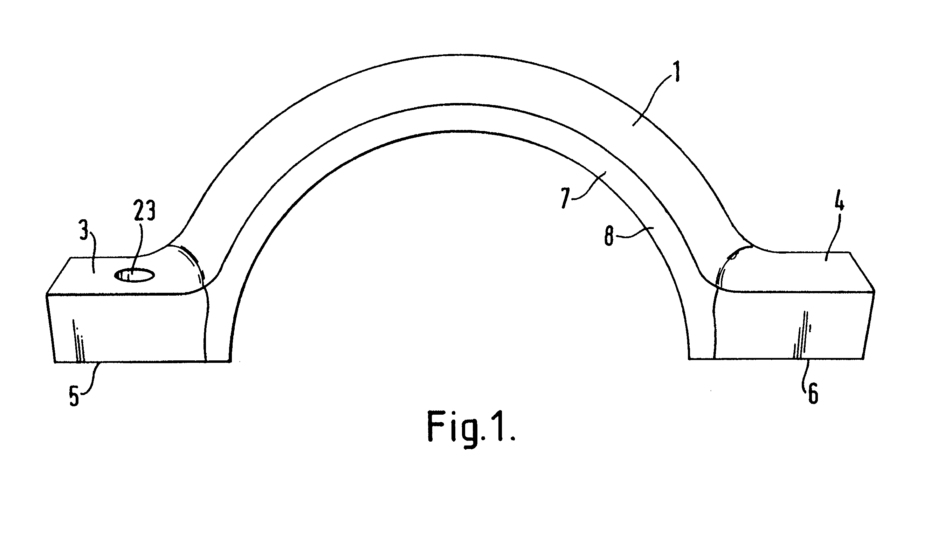

Figure 1 is a part sectional front elevation of one of two segments of a pipe coupling according to the invention;

Figures 2 and 3 are side elevations showing two segments of a coupling according to the invention before and after being fully made up about two pipe ends;

Figures 4 and 5 are schematic plan views showing the disposition of the keys of the coupling of Figures 4 and 5 in pipe grooves before and after being fully made up respectively; and

Figure 6 is a schematic plan view corresponding to Figure 5 showing a modified form of key.

Referring now to the drawings, it will be seen that the coupling is, in principle, of the type comprising a pair of semi-circular arcuate segments 1, 2 having, at each end, lugs 3, 4 and having end surfaces 5, 6 lying in a plane passing through the axis of the coupling and at right angles to the median plane of the coupling. On each axial side of each segment is an internal arcuate rib or key 7, 8 adapted, in operation of the coupling, to engage in corresponding grooves 9, 10 in the pipes 11, 12 to be jointed by the coupling. Within a cavity 13 between the two sets of keys is located, in use, an annular sealing gasket 40 of common type adapted to provide a seal with the two pipes 11, 12 to be connected. The lugs 3, 4 are provided with apertures 22, 23 for the receipt of bolts 41 having appropriate nuts 42 for coupling the segments together.

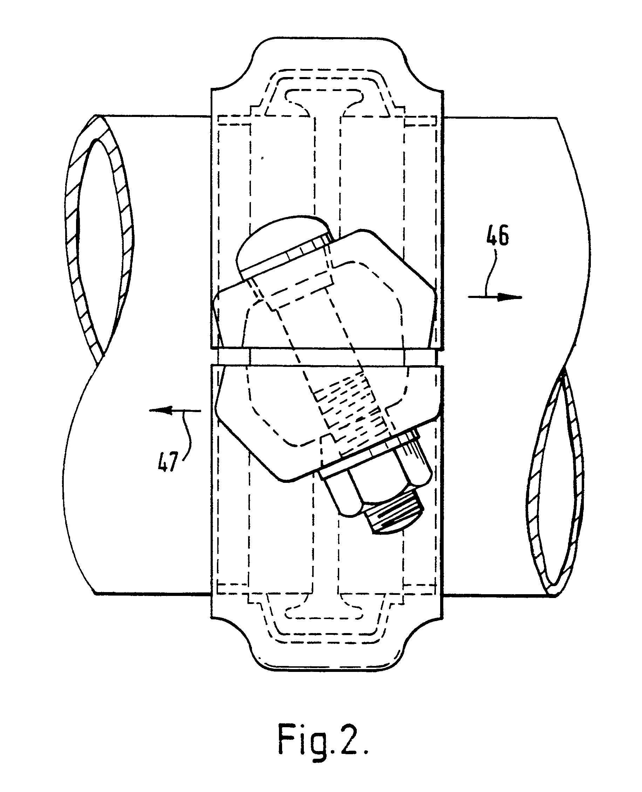

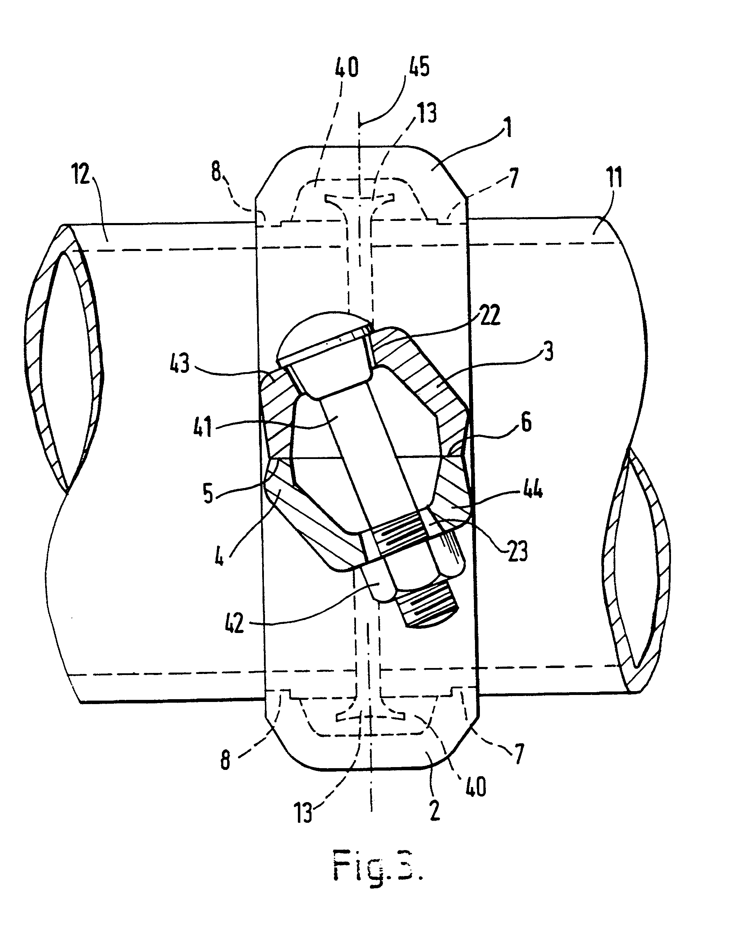

It will be seen that the walls 43, 44 of the lugs 3, 4 carrying the apertures 22, 23 for the receipt of the bolt 41 are inclined to the median plane of the coupling (indicated by line 45 in Figure 3), and that in consequence the bolt 41 is also inclined to the median plane of the coupling, at right angles to the inclination of the walls 43, 44. By this means it will be seen that on tightening the nut and bolt 42, 41 a force drawing together the coupling segments 1 and 2 is exerted which is inclined to the median plane of the coupling, so that axial movements are urged upon the segments 1, 2 as indicated by the arrows 46, 47 in Figure 2.

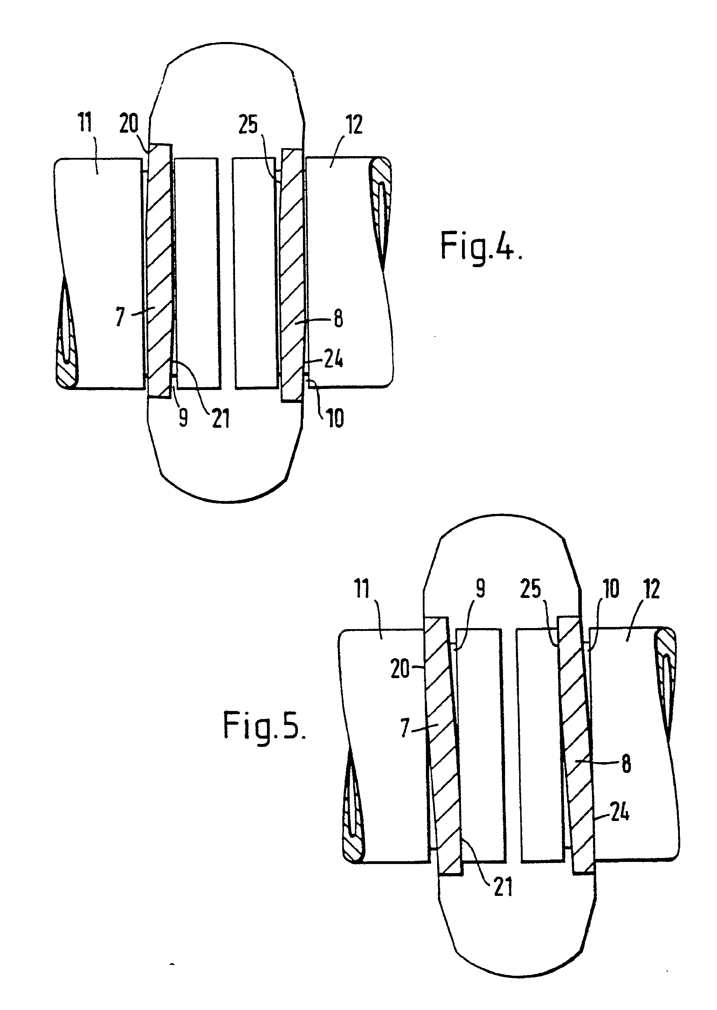

The configurtion of the keys 7, 8 in each segment can, in certain regards, best be seen from Figures 4 and 5. In essence the keys are inclined or offset from plane parallel to the arucuate centre line of each segment. In addition the keys have angled side portions 20, 21, 24, 25 and are of reducing width adjacent the end of each segment.

The active purpose of the relative inclination of the keys with respect to the arcuate centre line of the coupling segment is apparent when considering Figures 2 and 3 in particular. On placing the coupling loosely about the two pipes 11, 12 to be connected therbey, as can be seen in Figure 2, the keys lie loosely within and along the line of the annular grooves 9, 10 around the outsides of the pipes, whilst the coupling segments themselves are each offset with respect to the median plane. A similar but opposite offset occurs in each of the two segments so that, at this loosely coupled position, the end surfaces 5, 6 of the segments 1, 2 have a relative displacement to each other as can clearly be seen in Figure 2, but with the keys 7, 8 lying generally in line with each other.

On tightening the nuts and bolts 41, 41 the segments, after being brought together, are moved, on each side of the coupling, in the direction of arrows 46, 47 so that on being fully made up with the end surfaces 5, 6 of the segments firmly abutting and the coupling defining its single effective inner peripheral length, with the gasket 40 disposed within the coupling for sealing the jointed pipes, the ends of the segments are in line with each other as can be seen from Figure 3 and are no longer offset with respect to each other, but as can be appreciated from Figure 5 the keys are significantly misaligned so that the angled side wall portions 20, 21, 24, 25 of the keys bear at each end upon the side walls of the grooves 9, 10 in the pipes 11, 12 whereby to hold the joint firm and rigid as well as sealed and locked. As can be seen the effect of the angled side wall portions of the keys is to enable a significant area of contact between the keys and the side walls and not just point contact, providing greater strength and greater facility to hold the joint firm and rigid.

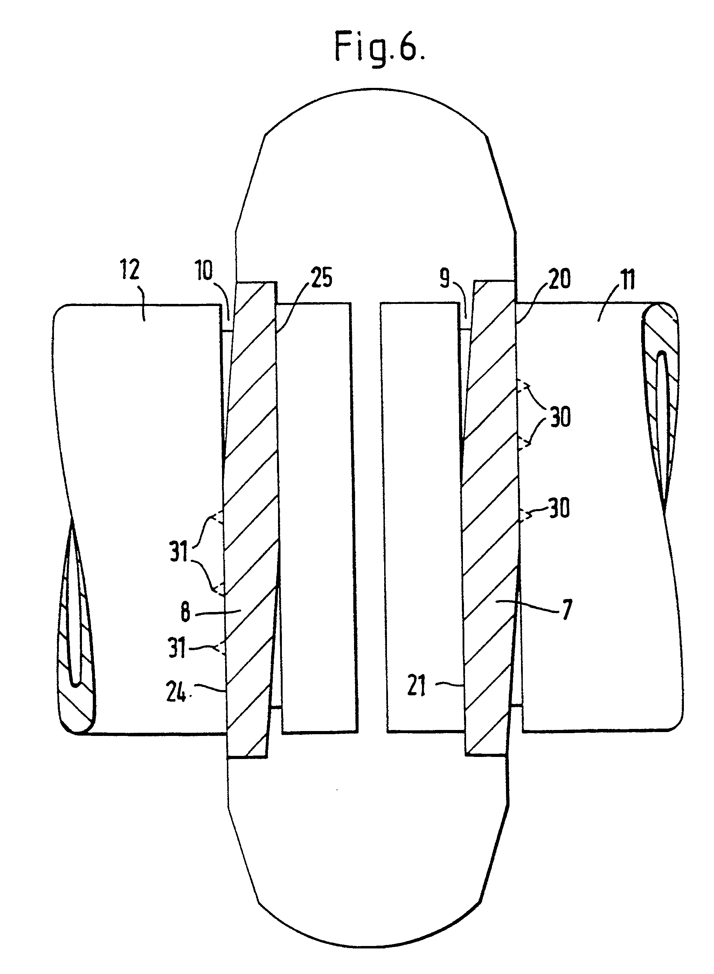

To enhance gripping of the side walls of the grooves 9 and 10 by the keys 7 and 8, a plurality of raised or sharp projections may be provided on at least some of the angled side wall portions as is shown at 30 and 31 in Figure 6. On tightening the coupling to the Figure 6 position, projections 30 and 31 are forced into the walls of grooves 9 and 10 respectively; greatly assisting the firm location of the joint and preventing rotational movement of the pipes 11 and 12 within the coupling.

By means of the invention we have enabled the provision of a coupling, capable of receiving all pipes within a predetermined tolerance range of outer diameters, having a single effective internal periphery, which is not only locked and sealed, in use, but is also firmly and rigidly held against axial, rotational and angular movement by virtue of the firm engagement of the keys of the coupling segments with the side walls of the annular grooves around the outside of the pipes.

It is to be understood that the foregoing is merely exemplary of pipe couplings in accordance with the invention and that modfications can readily be made thereto without departing from the true scope of the invention.

## Claims

1. A pipe coupling comprising a plurality of generally arcuate segments adapted to abut one another end to end when fully made up; the segments of the coupling being provided with two sets of axially separated keys extending radially inwardly thereof and adapted, in use, to engage in outer annular peripheral grooves in the pipes to be jointed by the coupling adjacent the ends thereof; an annular sealing gasket disposed between the keys for providing a seal for the pipes to be joined by the coupling; means for coupling the segments together at their ends, the segment ends having surfaces for complementary mating one with another, characterised in that said surfaces each lie in a plane passing through the axis of the coupling and at right angles to the median plane of the coupling, and the means for coupling the segments together at their ends are arranged to impose a coupling force on the segment end along a line inclined to the median plane of the coupling such that, after the complementary mating surfaces of adjacent segments are brought together to a fully made up disposition by operation of the coupling means, the keys are, at least in part, inclined to the median plane and the segments are aligned with the median plane, whereby in use the keys engage and bear upon side walls of the outer peripheral grooves of the point being jointed.

2. A pipe coupling comprising a plurality of generally arcuate segments having generally radially extending lugs at or adjacent each segment end carrying means for coupling together the segments, the segment ends and lugs having surfaces in the axial plane of the coupling and at right angles to the median plane for complementary mating one with another in make up of the coupling; the means for coupling together the segments passing through juxtaposed lugs of adjacent arcuate segments from surfaces thereof inclined to the median plane of the coupling whereby the means for coupling together the segments are adapted to apply a coupling force in a line inclined to the median plane of the segments; the segments of the coupling being provided with two sets of axially separated keys extending radially inwardly thereof and adapted in use to engage in outer axially peripheral grooves in or adjacent the ends of the pipes to be joined by the coupling, and the coupling being provided with an annular sealing gasket disposed between the keys for providing a seal for the pipes jointed by the coupling; characterised in that the relative disposition of the coupling means and the complementary mating surfaces of the segment ends and lugs is such that upon coupling the segments together by means of the means for coupling, the keys are, at least in part, inclined to the median plane and the segments are aligned with the median plane, whereby, in use, the keys engage and bear upon side walls of the outer peripheral grooves of the pipes being jointed.

3. A pipe coupling as claimed in claim 1 or 2 characterised in that the keys of each segment are, at least in part, inclined to the arcuate centre line of their segment.

4. A coupling as claimed in claim 2, or claim 3 as dependent on claim 2 characterised in that the means for coupling together the segments comprise nuts and bolts passing through the lugs between surfaces thereof inclined to the median plane of the coupling.

5. A coupling as claimed in any one of the preceding claims characterised by two generally semi-circular segments arranged to be coupled together about the two pipes to be joined.

6. A coupling as claimed in claim 5 characterised in that the means for coupling together the segments at the complementary mating ends thereof are inclined oppositely equally with respect to the median plane of the coupling.

7. A coupling as claimed in any one of the preceding claims characterised in that the axially facing portions of the walls of the keys of the segments are angled with respect to the inclined line of the keys such that at full make-up for a joint incorporating the couplings and pipes, bearing contact between the keys and the side walls of the pipes is over the areas of the angled portions of the keys.

Fig.1.

Fig.2.

Fig.3.

Fig.4.

Fig.5.

# Fig.6.